Europäisches Patentamt

European Patent Office

Office européen des brevets

(19)

(11) Veröffentlichungsnummer: **0 450 296 A2**

(12) **EUROPÄISCHE PATENTANMELDUNG**

(21) Anmeldenummer: 91102486.7

(51) Int. Cl.5: **C09K 3/18**

(22) Anmeldetag: 21.02.91

(30) Priorität: 28.02.90 DE 4006191

(43) Veröffentlichungstag der Anmeldung:
09.10.91 Patentblatt 91/41

(84) Benannte Vertragsstaaten:
AT BE CH DE DK ES FR GB GR IT LI NL SE

(71) Anmelder: Kali-Chemie Aktiengesellschaft
Postfach 220, Hans-Böckler-Allee 20
W-3000 Hannover 1(DE)

(72) Erfinder: Buchwald, Hans
Am Rodelberg 51 A
W-3003 Ronnenberg(DE)
Erfinder: Brackmann, Andreas
Hedwigstrasse 10
W-3000 Hannover 1(DE)
Erfinder: Raszkowski, Boleslaus
In der Hespe 246
W-3061 Wiedensahl(DE)

(74) Vertreter: Lauer, Dieter, Dr.
c/o Solvay Deutschland GmbH, Postfach 220,
Hans-Böckler-Allee 20
W-3000 Hannover 1(DE)

(54) Zusammensetzungen auf Basis von Dichlorpentafluorpropanen zur Wasserentfernung von Oberflächen.

(57) Beschrieben werden Zusammensetzungen auf Basis der wasserstoffhaltigen Fluorchlorkohlenwasserstoffe aus der Gruppe der Dichlorpentafluorpropane, die spezielle oberflächenaktive Substanz enthalten. Ferner wird die Anwendung dieser Zusammensetzungen zur Entfernung von Wasser von Oberflächen von Gegenständen unterschiedlichster Art und aus unterschiedlichsten Materialien beschrieben.

EP 0 450 296 A2

Die vorliegende Erfindung bezieht sich auf Zusammensetzungen auf Basis der wasserstoffhaltigen Fluorchlorkohlenwasserstoffe aus der Gruppe der Dichlorpentafluorpropane und die Anwendung dieser Zusammensetzungen zur Entfernung von Wasser von Oberflächen von Gegenständen unterschiedlichster Art und aus unterschiedlichsten Materialien.

Bei vielen Bearbeitungs- und Reinigungsvorgängen, z.B. in der Elektro- oder der Elektronikindustrie, der optischen Industrie, sowie auch z.B. in der mechanischen Industrie bei der Herstellung hochwertiger Präzisionswerkstücke kommen Gegenstände mit Wasser oder Feuchtigkeit gewollt oder auch ungewollt in Berührung. Diesen Gegenständen kann daher Wasser (z.B. als Feuchtigkeitsfilm) anhaften. Die Gegenwart von anhaftendem Wasser kann sich aber im Hinblick auf weitere Bearbeitungsschritte, die Funktionstüchtigkeit und die Lebensdauer der Gegenstände nachteilig auswirken. Es ist daher notwendig, daß viele Gegenstände unmittelbar nach den Bearbeitungs oder Reinigungsvorgängen, die die Gegenwart von Wasser beinhalten, oder auch nach bloßem Kontakt mit Luftfeuchtigkeit etc. vor der Weiterverarbeitung oder für den funktionsgerechten Einsatz vollständig von anhaftendem Wasser befreit werden.

Die Entfernung von Wasser von den Gegenständen wird nachfolgend auch als Trocknen bzw. Trocknung bezeichnet. Zur Trocknung von Gegenständen werden im Stand der Technik die Gegenstände, je nach ihrer Art, durch Erhitzen oder durch Behandlung mit Zusammensetzungen ("Trocknungszusammensetzungen") aus bestimmten Lösungsmitteln (wie z.B. Kohlenwasserstoffe, Aceton, Alkohole, oder vollhalogenierte Fluorchlorkohlenwasserstoffe) und oberflächenaktiven Substanzen getrocknet. Da die zu trocknenden Gegenstände aus unterschiedlichsten Materialien, z.B. aus Kunststoffen, Glas, Metallen oder Kombinationen derselben bestehen können, sollten die Trocknungsverfahren und die zur Trocknung verwendeten Trocknungszusammensetzungen mit einer Vielzahl von Materialien verträglich sein. Trocknung durch Erhitzen stellt im allgemeinen aber eine unerwünschte, sehr hohe thermische Belastung für die zu trocknenden Gegenstände dar oder kommt wegen der hohen anzuwendenden Temperaturen für eine Vielzahl von Materialien nicht in Frage. Auch ist in vielen Fällen auf diese Weise eine fleckenfreie Trocknung nicht möglich. Die Bestandteile in den Trocknungszusammensetzungen wiederum, insbesondere das die Hauptkomponente bildende Lösungsmittel, sollte sich gegenüber einer Vielzahl unterschiedlichster Materialien inert verhalten.

Zwar wurden bereits viele Anstrengungen unternommen, um für verschiedene Anwendungsgebiete und für verschiedene Materialien Trocknungszusammensetzungen mit den gewünschten Eigenschaften, wie z.B. hohe Trocknungswirkung, Trocknungsqualität bzw. gute Inertheit gegenüber den zu trocknenden Gegenständen, zu erzielen, doch sind die bekannten Zusammensetzungen in ihren anwendungstechnischen, toxikologischen und die Umwelt beeinflussenden Eigenschaften immer noch verbesserungsbedürftig. Die hohen Anforderungen hinsichtlich Inertheit, Trocknungswirkung und Trocknungsqualität werden durch die bekannten Zusammensetzungen des Standes der Technik nicht immer oder häufig nur unbefriedigend erfüllt. Oder andere bekannte Zusammensetzungen enthalten größere Anteile an toxikologisch und unter Sicherheitsaspekten (niedriger Flammpunkt bedenklichen Lösungsmitteln. Andere Zusammensetzungen enthalten Lösungsmittelbestandteile, für die aufgrund ihrer die Umwelt beeinflussenden Eigenschaften ein Ersatz durch andere, für die jeweiligen Anwendungszwecke mindestens gleichermaßen gut geeignete Lösungsmittel wünschenswert ist. Es besteht daher ein Bedürfnis nach neuen Trocknungszusammensetzungen mit verbesserten Eigenschaften, die darüber hinaus auch hinsichtlich der Kriterien Toxikologie und insbesondere Umweltbeeinflussung erhöhte Unbedenklichkeit aufweisen.

Es bestand daher die Aufgabe, neue Zusammensetzungen zur Wasserentfernung (Trocknung) von Oberflächen von Gegenständen zur Verfügung zu stellen, die die Nachteile des Standes der Technik überwinden und zur Wasserentfernung besonders gut geeignet sind.

Zur Lösung dieser Aufgabe schlägt die Erfindung neue Zusammensetzungen vor, die sich einerseits durch einen Gehalt an 99,99 bis 90 Gew.-% eines Dichlorpentafluorpropans oder eines Gemisches von Dichlorpentafluorpropanen und 0,01 bis 10 Gew.-% einer darin gelösten, oberflächenaktiven Substanz oder eines Gemisches dieser oberflächenaktiven Substanzen auszeichnen, wobei die Summe der Bestandteile 100 Gew.-% ist. Ein weiteres Kennzeichen der erfindungsgemäßen Zusammensetzungen besteht darin, daß die oberflächenaktive Substanz ausgewählt ist aus geradkettigen Alkylaminen oder Carbonsäuren mit jeweils 9 bis 12 C-Atomen, aus verzweigten Alkylaminen oder Carbonsäuren mit jeweils 8 bis 12 C-Atomen, aus Phosphorsäurealkyl- und/oder -arylestern, aus Salzen der obigen Alkylamine mit den obigen Carbonsäuren oder aus Salzen geradkettiger oder verzweiger C8- bis C12-Alkylamine mit Alkyl- und/oder Arylphophorsäuremono- oder -diestern.

In einer zweckmäßigen Untervariante der Erfindung sind die Zusammensetzungen dadurch gekennzeichnet, daß sie 99,95 bis 95 Gew.-% des Dichlorpentafluorpropans und 0,05 bis 5 Gew.-% der oberflächenaktiven Substanz enthalten, wobei die Summe der Bestandteile 100 Gew.-% ist.

Dichlorpentafluorpropane im Sinne der Erfindung sind die ein Wasserstoffatom tragenden Fluorchlor-

kohlenwasserstoffe der Summenformel $C_3 HCl_2F_5$. Es handelt sich insbesondere um die nicht vollhalogenierten isomeren Fluorchlorkohlenwasserstoffe 1,2-Dichlor-1,1,2,3,3-pentafluorpropan, 2,3-Dichlor-1,1,1,2,3-pentafluorpropan, 1,1-Dichlor-2,2,3,3,3-pentafluorpropan (= 3,3-Dichlor-1,1,1,2,2-pentafluorpropan), 1,3-Dichlor-1,1,2,2,3-pentafluorpropan, 1,1-Dichlor-1,2,2,3,3-pentafluorpropan, 1,2-Dichlor-1,1,3,3,3-pentafluorpropan, 1,1-Dichlor-1,2,3,3,3-pentafluorpropan. Bevorzugte Dichlorpentafluorpropane sind 1,1-Dichlor-2,2,3,3,3-pentafluorpropan (R225ca) und 1,3-Dichlor-1,1,2,2,3-pentafluorpropan (R225cb).

Die Trocknungszusammensetzungen der Erfindung enthalten spezielle oberflächenaktive Substanzen, welche in den Dichlorpentafluorpropanen löslich sind und welche die Verdrängung bzw. Entfernung von Wasser von den Oberflächen der zu trocknenden Gegenstände durch das Dichlorpentafluorpropan erleichtern. Diese oberflächenaktiven organischen Substanzen im Sinne der Erfindung können z.B. geradkettige Alkylamine mit 9 bis 12 C-Atomen oder verzweigtkettige Alkylamine mit 8 bis 12 C-Atomen sein. Beispiele für bevorzugte Alkylamine sind insbesonere Nonylamin, tert.-Octylamin und 2-Ethylhexylamin. Weitere oberflächenaktive organische Substanzen im Sinne der Erfindung können z.B. aliphatische geradkettige C9- bis C12-Carbonsäuren oder verzweigtkettige C8-bis C12-Carbonsäuren sein. Beispiele für bevorzugte oberflächenaktive Carbonsäuren sind insbesondere iso-Octansäure, 2-Ethylhexansäure und Nonansäure.

Unter der Bezeichnung Isooctansäure werden hierbei Gemische isomerer, verzweigter aliphatischer Monocarbonsäuren mit 8 C-Atomen verstanden, die im allgemeinen durch Oxidation von Oxo-Aldehyden bzw. Oxo-Alkoholen hergestellt werden können.

Zu den oberflächenaktiven Phosphorsäurealkyl- und/oder -arylestern im Sinne der Erfindung gehören Phosphorsäuremono-, Phosphorsäuredi- und Phosphorsäuretriester, d.h. es liegen Phosphorsäureverbindungen vor, in denen eine, zwei oder alle drei Hydroxygruppen der Phosphorsäure durch gleiche oder auch unterschiedliche, unverzweigte oder verzweigte, gesättigte oder ungesättigte Alkylgruppen, durch Arylgruppen oder auch durch alkylsubstituierte Arylgruppen verestert sind. Solche Phosphorsäureester genügen z.B. der allgemeinen Formel $(R^1O)(R^2O)(R^3O)P=O$. Der Rest $R^1$ steht hierin für einen geradkettigen oder verzweigten C1- bis C20-Alkylrest, einen C7-bis C26-Alkylphenylrest oder für einen Phenylrest. Die Reste $R^2$ und $R^3$ bedeuten im Falle von Phosphorsäuremonoestern beide Wasserstoff und im Falle von Phosphorsäuretriestern besitzen die Reste $R^2$ und $R^3$ unabhängig voneinander die Bedeutung von $R^1$. Im Falle von Phosphorsäurediestern bedeutet einer der Reste $R^2$ und $R^3$ Wasserstoff und der verbleibende Rest besitzt die Bedeutung von $R^1$. Beispiele für bevorzugte oberflächenaktive Substanzen aus der Gruppe dieser Phosphorsäureester sind insbesondere Butylphosphat, Octylphosphat, Decylphosphat, 2-Ethylhexylphosphat, Didecylphosphat, Didodecylphosphat, Di-(3,6-dioxapentadecyl)-phosphat, Tri-(2-ethylhexyl)-phosphat, Tri-n-butylphosphat, Triphenylphosphat oder Diphenyl-(2-ethylhexyl)-phosphat. Besonders bevorzugt sind Tri-(2-ethylhexyl)-phosphat, Tri-n-butylphosphat, Triphenylphosphat oder Diphenyl-(2-ethylhexyl)-phosphat.

Eine andere Gruppe der oberflächenaktiven Substanzen im Sinne der Erfindung sind Salze aus a) den oben genannten Alkylaminen mit b) den oben genannten Carbonsäuren. Beispiele hierfür sind insbesondere die Salze Nonylamin/iso-Octansäure, tert.-Octylamin/iso-Octansäure, Nonylamin/2-Ethylhexansäure, tert.-Octylamin/2-Ethylhexansäure, Nonylamin/Nonansäure und tert.-Octylamin/Nonansäure. Eine weitere Gruppe der oberflächenaktiven Substanzen im Sinne der Erfindung sind Salze aus geradkettigen oder verzweigten C8- bis C12-Alkylaminen mit den oben beschriebenen Phosphorsäuremono- bzw. Phosphorsäurediestern der Formel $(R^1O)(R^2O)(R^3O)P=O$ mit $R^2$ gleich Wasserstoff. Beispiele hierfür sind insbesondere Salze aus Tri-n-butylphosphat mit Octylamin oder aus Triphenylphosphat mit 2-Ethylhexylamin.

In einer zweckmäßigen Ausgestaltung der Erfindung liegen Zusammensetzungen vor, die als oberflächenaktive Substanzen ein Gemisch aus a) dem oberflächenaktiven Alkylamin mit b) der oberflächenaktiven Carbonsäure oder dem oberflächenaktiven Phosphorsäureester in einem Molverhältnis von a:b von 0,3:0,7 bis 0,55:0,45 enthalten.

Die vorstehend beschriebenen erfindungsgemäßen Zusammensetzungen sind flüssige homogene Zusammensetzungen mit einer ungewöhnlichen Wirksamkeit für die Entfernung von Wasser von Oberflächen von Gegenständen. Ein weiterer Gegenstand der Erfindung betrifft daher die Wasserentfernung von Oberflächen von Gegenständen unter Verwendung der erfindungsgemäßen Zusammensetzungen.

Ferner betrifft die Erfindung auch ein Verfahren zur Wasserentfernung von Oberflächen von Gegenständen, welches sich dadurch auszeichnet, daß man die Oberflächen mit den weiter oben beschriebenen erfindungsgemäßen Zusammensetzungen behandelt.

Durch die Erfindung werden Zusammensetzungen zur Verfügung gestellt, die besonders gut für die Entfernung von Wasser von Oberflächen von festen Gegenständen geeignet sind. Die zu behandelnden Oberflächen, die feucht, wassernaß und/oder mit flüssigem Wasser überzogen sind, können sehr gut durch die Behandlung mit den erfindungsgemäßen Zusammensetzungen vom anhaftenden Wasser befreit, d.h. getrocknet, werden. Die Kontaktierung der Oberflächen mit den erfindungsgemäßen Zusammensetzungen kann durch Aufsprühen, Aufbürsten oder auf sonstige Art und Weise erfolgendes Aufbringen der Zusammensetzung, durch Leiten der Zusammensetzung über die Oberflächen oder durch Eintauchen der Gegenstände in die Zusammensetzung geschehen. Bei Anwendung von Eintauchungstechniken kann die Zusammensetzung in geeigneter Weise durchbewegt bzw. gerührt oder in anderer Weise in ihrer Wirkung, z.B. durch Ultraschall, unterstützt werden.

Die Entfernung des Wassers kann bei Temperaturen von oberhalb des Erstarrungspunktes von Wasser bis zum Siedepunkt der Zusammensetzung und/oder der Temperatur, bei der sich Wasser immer noch im flüssigen Zustand befindet, erreicht werden. Die Zeit der Behandlung ist nicht besonders kritisch, da eine erhebliche Menge von Wasser von den Oberflächen bereits nach anfänglichem Kontakt der Oberflächen mit den erfindungsgemäßen Zusammensetzungen entfernt wird. Für praktische Zwecke empfiehlt sich gewöhnlich, daß die zu trocknenden Oberflächen mit der Zusammensetzung etwa 1 Minute lang in Kontakt sein sollten, obgleich - je nach den jeweiligen Oberflächen des Trocknungsgutes bzw. den jeweiligen Umständen des Trocknungsvorganges - auch längere oder kürzere Zeiten angewendet werden können. Gewünschtenfalls kann der feste Gegenstand nach der Trocknung mit frischem, flüssigen und/oder dampfförmigen Fluorchlorkohlenwasserstoff (vorzugsweise ein Dichlorpentafluorpropan) und/oder einem anderen nichtwäßrigen, gegenüber den Oberflächen relativ inerten Lösungsmittel gespült werden, um ggf. auf den Oberflächen zurückgebliebene, oberflächenaktive Substanzen zu entfernen. Schließlich kann gewünschtenfalls den Gegenständen nach der Trocknung anhaftender flüssiger Fluorchlorkohlenwasserstoff von den Oberflächen durch herkömmliche Techniken, beispielsweise durch Abdampfen, entfernt werden.

Die erfindungsgemäßen Zusammensetzungen erfüllen alle Kriterien die für eine gute Zusammensetzung für die Entfernung von Wasser von Oberflächen gelten. So ermöglichen sie eine wirksame Trocknung von Gegenständen aus unterschiedlichsten Materialien. Sie eignen sich gleichermaßen gut für Gegenstände aus Metall, aus Glas, aus feuerfesten Materialien, aus Edelsteinen oder aus üblichen Kunststoffen. Die Entfernung von Wasser geschieht so schnell und so vollständig wie möglich. Die Zusammensetzungen bilden keine Emulsionen mit Wasser und ermöglichen eine schnelle Bildung einer getrennten Wasser- und Lösungsmittelphase. Dieses Kriterium ist sehr wichtig, da im Falle einer Emulsionsbildung sich einerseits Wasser in den Zusammensetzungen anreichern und andererseitzs ein Teil der Zusammensetzung mit dem abzuführenden Wasser aus der Trockenstufe ausgeschleust werden könnte und dadurch die Phasentrennung von Wasser und Lösungsmittel erschwert würde. Schließlich sind die erfindungsgemäßen Zusammensetzungen über einen langen Anwendungszeitraum stabil, d.h. sie verarmen nicht bzw. nur in untergeordnetem Maße an den im Dichlorpentafluorpropan enthaltenen oberflächenaktiven Substanzen. Die oberflächenaktiven Substanzen werden durch das abzufüh-rende Wasser nicht oder nur kaum aus den Dichlorpentafluorpropanen extrahiert, da die Affinität der Dichlorpentafluorpropane insbesondere zu den bevorzugt verwendeten oberflächenaktiven Substanzen größer ist als die Affinität des Wassers zu diesen oberflächenaktiven Substanzen. Ferner besitzen die erfindungsgemäßen Zusammensetzungen keine Flammpunkte.

Nachfolgend soll die Erfindung anhand von Beispielen weiter erläutert werden, ohne sie jedoch in ihrem Umfange zu beschränken.

Beispiele

In einer handelsüblichen 3-Kammer-Trocknungsanlage wurden Trocknungsversuche mit Gegenständen aus unterschiedlichsten Materialien vorgenommen. Die 3-Kammer-Trocknungsanlage bestand aus einem Trocknungsbad und zwei hintereinander zum Trocknungsbad kaskadenartig angeordneten Spülbädern, wobei das zweite Spülbad mit einem Überlauf zum ersten Spülbad und das erste Spülbad mit einem Überlauf zum Trocknungsbad versehen war. Über den drei Bädern erstreckte sich ein gemeinsamer Dampfraum, der nach oben zum Zwecke der Lösungsmittelkondensation mit einer Kühlzone versehen war. Das in der Kühlzone abgeschiedene und gesammelte Kondensat wurde über eine Rückführungsleitung in das zweite Spülbad rezirkuliert. Alle drei Kammern der Trocknungsanlage waren zusätzlich mit separaten Heizvorrichtungen ausgestattet. Das Trocknungsbad war durch einen Überlauf mit einer Wasserabscheideeinrichtung verbunden, in der die Trocknungszusammensetzung vom Wasser durch Separation getrennt wurde. Von der Wasserabscheideeinrichtung wurde die Trocknungszusammensetzung nach der Wasserabtrennung mittels einer Pumpe über eine Rückführungsleitung in das Trocknungsbad rezirkuliert.

Zur Trocknung wurden die Gegenstände zunächst 1 Minute in das Trocknungsbad mit siedender Trocknungszusammensetzung getaucht. Nach der Trocknung im Trocknungsbad wurde der zu trocknende Gegenstand in den zwei Spülbädern mit jeweils siedendem Dichlorpentafluorpropan für jeweils 1 Minute unter Eintauchen gespült. Nach 1-minütigem Verweilen in der Dampfphase verließ der zu trocknende Gegenstand die Anlage absolut trocken und kühl genug, daß man ihn anfassen konnte.

Die Trocknungsbad- und Spülbadzusammensetzungen, die Trocknungsbedingungen, die Art der zu trocknenden Gegenstände und die Trocknungsergebnisse sind in der Tabelle 1 wiedergegeben. Hierin steht die Bezeichnung R225ca für 1,1-Dichlor-2,2,3,3,3-pentafluorpropan.

Tabelle 1

| Nr. | Zusammen-setzungen | Trocknungs-bedingungen | Material | Ergebnis |
|---|---|---|---|---|
| 1 | Trocknungsbad 1 99,5 Gew.-% R225ca; 0,5 Gew.-% oberflächenak-tive Substanz aus iso-Octan-säure (0,6 mol) und tert.-Octylamin (0,4 mol)  Spülbad 2 und 3 R225ca  Dampfraum 4 R225ca | 1) 1 Min. sie-dend ge-taucht  2) 1 Min. sie-dend ge-taucht  3) 1 Min. sie-dend ge-taucht  4) 1 Min. Ver-weilzeit im Dampfraum | a) Glas-linsen  b) Sili-cium-schei-ben  c) Alu-minium-platten  d) Kunst-stoff-teile (Poly-ethylen) | absolut trocken  absolut trocken  absolut trocken  absolut trocken |
| 2 | Trocknungsbad 1 99,5 Gew.-% R225ca; 0,5 Gew.-% oberflächenak-tive Substanz aus iso-Octan-säure (0,6 mol) und Nonylamin (0,4 mol)  Spülbad 2 und 3 R225ca  Dampfraum 4 R225ca | 1) 1 Min. sie-dend ge-taucht  2) 1 Min. sie-dend ge-taucht  3) 1 Min. sie-dend ge-taucht  4) 1 Min. Ver-weilzeit im Dampfraum | a) Glas-linsen  b) Sili-cium-schei-ben  c) Alu-minium-platten  d) Kunst-stoff-teile (Poly-ethylen) | absolut trocken  absolut trocken  absolut trocken  absolut trocken |

| Nr. | Zusammen-setzungen | Trocknungs-bedingungen | Material | Ergebnis |
|---|---|---|---|---|
| 3 | Trocknungsbad 1 99,5 Gew.-% R225ca; 0,5 Gew.-% oberflächenak-tive Substanz aus 2-Ethyl-hexansäure (0,6 mol) und tert.-Octylamin (0,4 mol)<br><br>Spülbad 2 und 3 R225ca<br><br>Dampfraum 4 R225ca | 1) 1 Min. sie-dend ge-taucht<br><br>2) 1 Min. sie-dend ge-taucht<br><br>3) 1 Min. sie-dend ge-taucht<br><br>4) 1 Min. Ver-weilzeit im Dampfraum | a) Glas-linsen<br><br>b) Sili-cium-schei-ben<br><br>c) Alu-minium-platten<br><br>d) Kunst-stoff-teile (Poly-ethylen) | absolut trocken<br><br>absolut trocken<br><br>absolut trocken<br><br>absolut trocken |
| 4 | Trocknungsbad 1 99,5 Gew.-% R225ca; 0,5 Gew.-% oberflächenak-tive Substanz aus 2-Ethyl-hexansäure (0,6 mol) und Nonylamin (0,4 mol)<br><br>Spülbad 2 und 3 R225ca<br><br>Dampfraum 4 R225ca | 1) 1 Min. sie-dend ge-taucht<br><br>2) 1 Min. sie-dend ge-taucht<br><br>3) 1 Min. sie-dend ge-taucht<br><br>4) 1 Min. Ver-weilzeit im Dampfraum | a) Glas-linsen<br><br>b) Sili-cium-schei-ben<br><br>c ) Alu-minium-platten<br><br>d) Kunst-stoff-teile (Poly-ethylen) | absolut trocken<br><br>absolut trocken<br><br>absolut trocken<br><br>absolut trocken |

| Nr. | Zusammen-setzungen | Trocknungs-bedingungen | Material | Ergebnis |
|---|---|---|---|---|
| 5 | Trocknungsbad 1 99,5 Gew.-% R225ca; 0,5 Gew.-% oberflächenaktive Substanz aus Nonansäure (0,6 mol) und tert.-Octylamin (0,4 mol)  Spülbad 2 und 3 R225ca  Dampfraum 4 R225ca | 1) 1 Min. siedend getaucht  2) 1 Min. siedend getaucht  3) 1 Min. siedend getaucht  4) 1 Min. Verweilzeit im Dampfraum | a) Glaslinsen  b) Siliciumscheiben  c) Aluminiumplatten  d) Kunststoffteile (Polyethylen) | absolut trocken  absolut trocken  absolut trocken  absolut trocken |
| 6 | Trocknungsbad 1 99,5 Gew.-% R225ca; 0,5 Gew.-% oberflächenaktive Substanz aus Nonansäure (0,6 mol) und Nonylamin (0,4 mol)  Spülbad 2 und 3 R225ca  Dampfraum 4 R225ca | 1) 1 Min. siedend getaucht  2) 1 Min. siedend getaucht  3) 1 Min. siedend getaucht  4) 1 Min. Verweilzeit im Dampfraum | a) Glaslinsen  b) Siliciumscheiben  c) Aluminiumplatten  d) Kunststoffteile (Polyethylen) | absolut trocken  absolut trocken  absolut trocken  absolut trocken |

| Nr. | Zusammen-setzungen | Trocknungs-bedingungen | Material | Ergebnis |
|---|---|---|---|---|
| 7 | Trocknungsbad 1 99,5 Gew.-% R225ca; 0,5 Gew.-% oberflächenak-tive Substanz aus Tri-n-bu-tylphosphat (0,6 mol) und Octylamin (0,4 mol) | 1) 1 Min. sie-dend ge-taucht 2) 1 Min. sie-dend ge-taucht 3) 1 Min. sie-dend ge-taucht | a) Glas-linsen b) Sili-cium-schei-ben c) Alu-minium-platten | absolut trocken absolut trocken absolut trocken |
| | Spülbad 2 und 3 R225ca Dampfraum 4 R225ca | 4) 1 Min. Ver-weilzeit im Dampfraum | d) Kunst-stoff-teile (Poly-ethylen) | absolut trocken |
| 8 | Trocknungsbad 1 99,5 Gew.-% R225ca; 0,5 Gew.-% oberflächenak-tive Substanz aus Triphenyl-phosphat (0,6 mol) und 2-Ethylhexyl-amin (0,4 mol) | 1) 1 Min. sie-dend ge-taucht 2) 1 Min. sie-dend ge-taucht 3) 1 Min. sie-dend ge-taucht | a) Glas-linsen b) Sili-cium-schei-ben c) Alu-minium-platten | absolut trocken absolut trocken absolut trocken |
| | Spülbad 2 und 3 R225ca Dampfraum 4 R225ca | 4) 1 Min. Ver-weilzeit im Dampfraum | d) Kunst-stoff-teile (Poly-ethylen) | absolut trocken |

**Patentansprüche**

1. Zusammensetzungen aus Dichlorpentafluorpropanen und oberflächenaktiven Substanzen, dadurch gekennzeichnet, daß sie 99,99 bis 90 Gew.-% eines Dichlorpentafluorpropans oder eines Gemisches von Dichlorpentafluorpropanen und 0,01 bis 10 Gew.-% einer darin gelösten, oberflächenaktiven Substanz oder eines Gemisches dieser oberflächenaktiven Substanzen enthalten, wobei die Summe der Bestandteile 100 Gew.-% ist, und daß die oberflächenaktive Substanz ausgewählt ist aus geradkettigen Alkylaminen oder Carbonsäuren mit jeweils 9 bis 12 C-Atomen, aus verzweigten Alkylaminen oder Carbonsäuren mit jeweils 8 bis 12 C-Atomen, aus Phosphorsäurealkyl- und/oder -arylestern, aus Salzen der obigen Alkylamine mit den obigen Carbonsäuren oder aus Salzen geradkettiger oder verzweigter C8-bis C12-Alkylamine mit Alkyl- und/oder Aryl-Phosphorsäuremono- oder -diestern.

2. Zusammensetzungen nach Anspruch 1, gekennzeichnet durch einen Gehalt an 99,95 bis 95 Gew.-% des Dichlorpentafluorpropans und 0,05 bis 5 Gew.-% der oberflächenaktiven Substanz, wobei die Summe der Bestandteile 100 Gew.-% ist.

3. Zusammensetzungen nach einem der Ansprüche 1 und 2, dadurch gekennzeichnet, daß das Dichlorpentafluorpropan 1,1-Dichlor-2,2,3,3,3-pentafluorpropan (R225ca) oder 1,3-Dichlor-1,1,2,2,3-pentafluorpropan (R225cb) ist.

4. Zusammensetzungen nach einem der vorhergehenden Ansprüche, dadurch gekennzeichnet, daß sie als oberflächenaktive Substanzen ein Gemisch aus a) dem Alkylamin mit b) der Carbonsäure oder dem Phosphorsäureester in einem Molverhältnis von a:b von 0,3:0,7 bis 0,55:0,45 enthalten.

5. Zusammensetzungen nach einem der Ansprüche 1 und 4, dadurch gekennzeichnet, daß das Alkylamin Nonylamin, tert.-Octylamin oder 2-Ethylhexylamin ist.

6. Zusammensetzungen nach einem der Ansprüche 1 und 4, dadurch gekennzeichnet, daß die Carbonsäure iso-Octansäure, 2-Ethylhexansäure oder Nonansäure ist.

7. Zusammensetzungen nach einem der Ansprüche 1 und 4, dadurch gekennzeichnet, daß die Phosphorsäurealkyl-, und/oder -arylester aus der Gruppe Tri-(2-ethylhexyl)-phosphat, Tri-n-butylphosphat, Triphenylphosphat oder Diphenyl-(2-ethylhexyl)-phosphat ausgewählt sind.

8. Verwendung der Zusammensetzungen gemäß einem der Ansprüche 1 bis 7 zur Wasserentfernung von Oberflächen von Gegenständen.

9. Verfahren zur Wasserentfernung von Oberflächen von Gegenständen, dadurch gekennzeichnet, daß man die Oberflächen mit Zusammensetzungen nach einem der Ansprüche 1 bis 7 behandelt.